(19) Europäisches Patentamt
European Patent Office
Office européen des brevets

(11) **EP 3 892 938 B1**

(12) **FASCICULE DE BREVET EUROPEEN**

(45) Date de publication et mention
de la délivrance du brevet:
**28.12.2022 Bulletin 2022/52**

(21) Numéro de dépôt: **21174126.9**

(22) Date de dépôt: **31.05.2016**

(51) Classification Internationale des Brevets (IPC):
**F24S 25/12** (2018.01)   **F24S 30/425** (2018.01)
**F24S 50/00** (2018.01)   **F24S 50/20** (2018.01)
**F24S 50/80** (2018.01)

(52) Classification Coopérative des Brevets (CPC):
**F24S 25/12; F24S 30/425; F24S 50/00;
F24S 50/20; F24S 50/80;** F24S 2201/00;
Y02E 10/47; Y02E 10/50

(54) **PROCÉDÉ DE PILOTAGE PRÉDICTIF DE L'ORIENTATION D'UN SUIVEUR SOLAIRE**

VERFAHREN ZUR PRÄDIKTIVEN STEUERUNG DER AUSRICHTUNG EINES SOLARTRACKERS

METHOD FOR PREDICTIVE CONTROL OF THE ORIENTATION OF A SOLAR TRACKER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.06.2015 FR 1555063**

(43) Date de publication de la demande:
**13.10.2021 Bulletin 2021/41**

(62) Numéro(s) de document de la (des) demande(s)
initiale(s) en application de l'article 76 CBE:
**19210920.5 / 3 628 939
16734420.9 / 3 303 939**

(73) Titulaire: **NEXTracker, Inc.
Fremont, California 94555 (US)**

(72) Inventeurs:
• **Blanc, Philippe
06140 Vence (FR)**
• **Crucifix, Adrien
13001 Marseille (FR)**
• **Arliaud, Jérôme
83910 Pourrières (FR)**

(74) Mandataire: **v. Bezold & Partner Patentanwälte -
PartG mbB
Ridlerstraße 57
80339 München (DE)**

(56) Documents cités:
EP-A1- 2 645 135       JP-A- 2007 184 354
US-A1- 2010 139 644    US-A1- 2010 294 337
US-A1- 2011 158 467    US-A1- 2011 220 091
US-A1- 2011 282 514    US-A1- 2013 048 048
US-A1- 2013 152 997    US-A1- 2014 083 413
US-B2- 8 369 999

**Description**

La présente invention se rapporte à un procédé de pilotage de l'orientation d'un suiveur solaire mono-axe, ainsi qu'à un suiveur solaire mono- axe conçu pour la mise en œuvre d'un tel procédé.

L'invention concerne le domaine des suiveurs solaires, autrement appelés systèmes de support suiveur ou « solar tracker », prévus pour supporter des capteurs solaires, généralement du type panneau photovoltaïque.

Elle concerne plus particulièrement les suiveurs solaires du type mono-axe c'est-à-dire orientable selon un unique axe principal de rotation, pour une rotation permettant de suivre le soleil lors de son élévation et de sa descente d'est en ouest. Pour précision, un tel axe principal de rotation s'étend généralement horizontalement et sensiblement parallèlement au sol sur lequel le suiveur solaire est ancré.

US 2011/158467 A1 divulgue un procédé de pilotage de l'orientation d'un suiveur solaire mono-axe orientable autour d'un axe de rotation, ledit procédé mettant en œuvre les étapes suivantes :

observer l'évolution dans le temps de la couverture nuageuse au-dessus du suiveur solaire, en observant la couverture nuageuse à plusieurs instants consécutifs au moyen d'un système d'observation du ciel au-dessus du suiveur solaire ;

traduire chaque observation faite par le système d'observation en une cartographie de la luminance solaire et déterminer l'évolution dans le temps d'un angle d'inclinaison optimal du suiveur solaire correspondant sensiblement à un maximum de rayonnement solaire sur le suiveur solaire, en fonction de la couverture nuageuse observée, en calculant pour chaque cartographie à chaque instant un angle d'inclinaison optimal associé à un maximum de luminance solaire sur ladite cartographie; et asservir l'orientation du suiveur solaire en fonction de l'évolution antérieure de l'angle d'inclinaison optimal.

US 2011/220091 A1 divulgue que des images représentatives des ombres des nuages par rapport à un champ d'héliostats peuvent être utilisées pour ajuster le fonctionnement d'un système à énergie solaire. US 2010/139644 A1 divulgue les modes de réalisation concernent des systèmes à énergie solaire et des procédés de fonctionnement correspondants. Dans certains modes de réalisation, le système d'énergie solaire comprenant: une pluralité d'héliostats configurés pour réfléchir la lumière du soleil sur une cible montée sur une tour, chaque héliostat comprenant un contrôleur d'héliostat respectif, la cible étant sélectionnée dans le groupe constitué d'une cible de conversion d'énergie.

Dans ce domaine, il est classique d'asservir l'orientation du suiveur solaire en se basant sur un calcul astronomique de la position du soleil, pour un positionnement en temps réel en face du soleil.

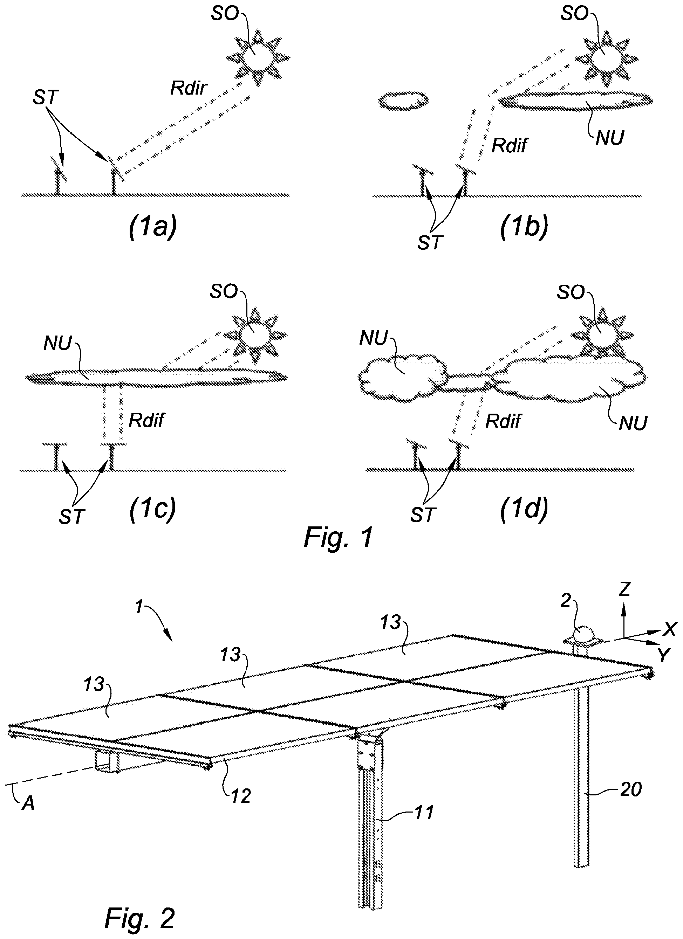

Ce type d'asservissement présente cependant un inconvénient majeur en offrant un déficit de rendement dans certaines conditions météorologiques, et nous nous référerons utilement à la figure 1 pour explication ; cette figure 1 comportant quatre schémas (1 a), (1 b), (1 c) et (1 d) illustrant chacun deux suiveurs solaires ST dans différentes conditions météorologiques, et avec le soleil SO toujours à la même position.

Le schéma (1 a) illustre des conditions météorologiques idéales, en l'absence de nuages, et les suiveurs solaires ST sont orientés en face du soleil SO afin de bénéficier d'un rayonnement solaire direct Rdir maximal. Dans ces conditions optimales avec une couverture nuageuse nulle, l'asservissement sur la position du soleil SO procure un fonctionnement maximal ; un tel asservissement correspondant à un asservissement de l'orientation du suiveur solaire sur un angle d'inclinaison dit direct défini par la direction du rayonnement solaire direct Rdir au niveau du suiveur solaire.

Les schémas (1 b), (1 c) et (1d) illustrent des conditions météorologiques dégradées, avec différentes couvertures nuageuses dépendant notamment de la surface nuageuse ou surface couverte, des types de nuages NU présents, du nombre et de la position des nuages NU vis-à-vis du soleil SO.

Dans de telles conditions nuageuses, l'asservissement sur la position du soleil SO peut ne pas procurer le meilleur rendement, en ne prenant pas en considération le rayonnement solaire diffus Rdif. Le rayonnement solaire diffus Rdif se manifeste lorsque le rayonnement solaire direct Rdir se disperse dans les nuages NU et les particules atmosphériques. Le rayonnement solaire diffus Rdif résulte de la diffraction de la lumière par les nuages NU et les molécules diverses en suspension dans l'atmosphère. Le rayonnement solaire diffus Rdif ne suit donc pas nécessairement la direction définie par le soleil SO en direction du point d'observation à la surface de la Terre.

Par conséquent, dans des conditions nuageuses, il peut être préférable, pour obtenir un rendement maximal au regard de ces conditions, d'orienter les suiveurs solaires ST sur une orientation dite indirecte ou diffuse selon une direction du rayonnement solaire diffus Rdif qui ne correspond pas nécessairement à la direction du rayonnement solaire direct Rdir ; un tel asservissement correspondant à un asservissement de l'orientation du suiveur solaire sur un angle d'inclinaison dit diffus défini par la direction du rayonnement solaire diffus Rdif au niveau du suiveur solaire.

Sur les schémas (1b), (1c) et (1d), les suiveurs solaires ST sont justement orientés selon des angles d'inclinaison diffus distincts de l'angle d'inclinaison direct, afin d'offrir un rendement optimal.

Ainsi, l'homme du métier serait tenté d'asservir, en temps réel, l'orientation du suiveur solaire sur un angle d'inclinaison optimal correspondant à un rayonnement solaire maximal. En l'absence de nuage, l'angle d'inclinaison optimal correspondrait à l'angle d'inclinaison direct et, en présence d'une couverture nuageuse voire d'un unique nuage devant le soleil, l'angle d'inclinaison optimal correspondrait à un angle d'inclinaison diffus. Pour ce faire, il suffirait de mesurer l'amplitude du rayonnement dans différentes directions, et d'établir la direction correspondant à une amplitude maximale pour en déduire l'angle d'inclinaison optimal.

Cependant, procéder ainsi présenterait de nombreux inconvénients, reposant tous sur la variation du rayonnement solaire diffus au cours du temps. En effet, suivant l'évolution temporelle de la couche nuageuse (du fait du déplacement des nuages sous l'effet des vents) et suivant la composition de cette couche nuageuse (nombre, dimensions, localisation et types de nuages), le rayonnement solaire diffus peut varier plus ou moins rapidement et donc l'angle d'inclinaison optimal peut varier plus ou moins vite au cours du temps.

Ainsi, en asservissant l'orientation du suiveur solaire sur cet angle d'inclinaison optimal, le suiveur solaire peut être amené à changer d'orientation plus ou mois souvent et plus ou moins vite. Or chaque changement d'orientation sollicite au moins un actionneur (généralement un moteur électrique), engendrant une consommation électrique et une usure des organes mécaniques sollicités par le changement d'orientation (paliers, éléments de guidage en rotation, ...). Ces consommations électriques et ces usures ne seront pas nécessairement compensées par les gains de productivité obtenus en se calant en temps réel sur l'angle d'inclinaison optimal.

A titre d'exemple, en partant d'une situation de départ où l'angle d'inclinaison optimal correspond à l'angle d'inclinaison direct, du fait de l'absence de nuage entre le soleil et le suiveur solaire, si un nuage unique passe devant le soleil durant quelques minutes, l'angle d'inclinaison optimal va être modifié durant ces quelques minutes pour ensuite recouvrer l'angle d'inclinaison direct. Asservir en temps réel l'orientation du suiveur solaire sur l'angle d'inclinaison optimal conduirait, dans ce cas, à déplacer le suiveur solaire durant ces quelques minutes, pour un bénéfice certainement très faible au regard de la consommation électrique du ou des actionneurs et de l'usure.

La présente invention a pour but de résoudre ces inconvénients en proposant un procédé de pilotage de l'orientation d'un suiveur solaire mono-axe, mettant en œuvre une étape de prévision de l'évolution de la couverture nuageuse afin de ne pas asservir systématiquement l'orientation du suiveur solaire sur l'angle d'inclinaison optimal, mais d'anticiper l'évolution de cet angle d'inclinaison optimal pour appliquer un compromis avantageux entre les gains de productivité en énergie solaire et les pertes en a consommation électrique du ou des actionneurs, et éventuellement en tenant compte de l'usure engendrée par les changements d'orientation.

A cet effet, elle propose un procédé de pilotage de l'orientation d'un suiveur solaire mono-axe orientable autour d'un axe de rotation, ledit procédé mettant en œuvre les étapes suivantes :
a) observer l'évolution dans le temps de la couverture nuageuse au-dessus du suiveur solaire mono-axe, en observant la couverture nuageuse à plusieurs instants consécutifs au moyen d'un système d'observation du ciel au-dessus du suiveur solaire mono-axe ; b) traduire chaque observation de la couverture nuageuse en une cartographie bidimensionnelle de la luminance solaire et déterminer l'évolution dans le temps d'un angle d'inclinaison optimal du suiveur solaire mono-axe, en fonction de la couverture nuageuse observée, en calculant pour chaque cartographie bidimensionnelle à chaque instant un angle d'inclinaison optimal; c) prévoir l'évolution future de la couverture nuageuse sur la base de l'évolution antérieure observée de la couverture nuageuse, en calculant à chaque instant présent au moins une cartographie prévisionnelle de la luminance solaire à un instant futur, en mettant en œuvre un calcul prévisionnel prenant en considération une évolution de la répartition de la luminance solaire sur des cartographies bidimensionnelles établies à plusieurs instants passés ; d) calculer l'évolution future de l'angle d'inclinaison optimal en fonction de la prévision de l'évolution future de la couverture nuageuse, en calculant pour chaque cartographie bidimensionnelle prévisionnelle un angle d'inclinaison optimal prévisionnel à un instant futur associé à un maximum de luminance solaire sur ladite prévisionnelle ; et e) asservir l'orientation du suiveur solaire mono-axe en fonction d'un taux d'usure d'organes mécaniques du suiveur solaire mono-axe sollicités lors d'un changement d'orientation du suiveur solaire mono-axe en partant d'un angle d'inclinaison présent jusqu'à atteindre un angle d'inclinaison optimal prévisionnel.

Ainsi, le procédé met en œuvre une prévision, à plus ou moins court terme, de l'évolution future de l'angle d'inclinaison optimal ; cet angle d'inclinaison optimal correspondant pour rappel à l'angle d'inclinaison du suiveur solaire qui offre la luminance solaire la plus élevée en fonction de la couverture nuageuse, cet angle d'inclinaison optimal pouvant correspondre soit à l'angle d'inclinaison direct (en particulier en l'absence de nuage, ou du moins en l'absence de nuage entre le soleil et le suiveur solaire) soit à un angle d'inclinaison diffus qui dépendra de la composition de la couche nuageuse (nombre, dimensions et types de nuages, localisation des nuages, surface nuageuse).

Puis, en fonction de cette évolution future de l'angle d'inclinaison optimale, un asservissement de l'orientation du suiveur solaire peut être mis en œuvre de manière anticipative, sans suivre de manière directe et en temps réel l'angle d'inclinaison optimal, permettant ainsi d'éviter des changements d'orientation qui ne procureraient que peu de gain énergétique, voire procureraient des pertes énergétiques, comme cela serait par exemple le cas si un unique nuage passe devant le soleil pour un temps réduit.

En outre, l'observation de la couverture nuageuse est traduite en une cartographie de la luminance solaire et cette cartographie est utilisée pour déterminer l'angle d'inclinaison optimale. La cartographie correspond en effet à une distribution de la luminance selon plusieurs angles d'élévation (angles généralement mesurés par rapport à un axe vertical, ces angles d'élévation étant directement à rapprocher de l'angle d'inclinaison du suiveur solaire), et la recherche de l'angle d'inclinaison optimale correspond à la recherche d'un angle d'élévation associé à un maximum de luminance solaire dans la cartographie.

La cartographie est bidimensionnelle autrement dit avec une distribution de la luminance selon plusieurs angles d'élévation et également selon plusieurs angles d'azimut (permettant ainsi de tenir compte de la largeur du capteur solaire - dimension prise dans une direction orthogonale à l'axe de rotation - et pas uniquement de la longueur du capteur solaire - dimension prise dans la direction de l'axe de rotation -).

Ainsi, l'observation de la couverture nuageuse est convertie en une cartographie de la luminance solaire reçue par un système d'observation, cette luminance solaire variant en fonction de l'angle d'observation. Au fur et à mesure du temps, les cartographies permettent d'observer l'évolution de la luminance solaire (directement dépendante de l'évolution de la couche nuageuse), puis d'établir des prévisions cartographiques sur l'état futur de la cartographie de la luminance solaire, et donc sur l'angle d'inclinaison qui permettrait au suiveur solaire de bénéficier, dans le futur, d'une luminance maximale.

Selon une autre caractéristique ne faisant pas partie de l'invention, lors de l'étape a), chaque cartographie est une cartographie bidimensionnelle établie selon deux directions, une première et une seconde directions, et, lors de l'étape b), l'angle d'inclinaison optimal est calculé pour chaque cartographie en mettant en œuvre les étapes suivantes :

- la cartographie constitue une carte de luminance solaire répartie selon des bandes parallèles à la première direction et associées respectivement à différents angles d'élévation et selon des colonnes parallèles à la seconde direction et associées respectivement à différents angles d'azimut, à chaque bande correspondant ainsi un angle d'inclinaison du suiveur solaire ;
- calculer pour chaque bande une valeur de luminance équivalente à partir de l'ensemble des valeurs de luminance prises dans la bande ;
- calculer pour chaque bande une valeur de luminance perçue par le support suiveur à partir des valeurs de luminance équivalentes calculées pour toutes les bandes et à partir des angles d'inclinaison associés aux bandes ;
- retenir l'angle d'inclinaison optimal comme étant l'angle d'inclinaison associée à la bande présentant la valeur de luminance perçue la plus élevée.

De cette manière, le calcul de l'angle d'inclinaison optimal est basé sur le calcul de valeurs de luminance perçues associées à chaque bande et donc à chaque angle d'inclinaison.

Avantageusement, la première direction est parallèle à l'axe de rotation du suiveur solaire et la seconde direction est horizontale et orthogonale à la première direction.

En outre, l'observation de la couverture nuageuse peut être réalisée selon l'une des méthodes suivantes :

- prise d'images du ciel à partir du sol au moyen d'un appareil de prise de vue, tel qu'une caméra ;
- mesure de la luminance solaire à partir du sol au moyen d'un ensemble de plusieurs cellules photosensibles ;
- récupération d'images satellites du ciel au-dessus du suiveur solaire.

Avec une prise d'image, l'observation correspond à une image. Avec une mesure de la luminance solaire par des cellules photosensibles l'observation correspond à une matrice des mesures faites individuellement par chaque cellule photosensible, ces cellules photosensibles étant positionnées à différents angles d'inclinaison, et notamment réparties sur un support en forme de dôme hémisphérique afin d'offrir une large observation du ciel. Avec une récupération d'images satellites, l'observation correspond à une image satellite de la zone concernée.

Selon une caractéristique avantageuse, lors de l'étape b), est mise en œuvre une étape de pondération fréquentielle appliquée sur l'observation qui est fonction à la fois d'une réponse en fréquence du système d'observation et d'une bande fréquentielle utile au capteur solaire.

Ainsi, la pondération fréquentielle va consister à appliquer un filtre fréquentielle qui tiendra compte de la réponse spectrale du capteur solaire.

Dans une réalisation particulière, - pour réaliser l'étape a), la couverture nuageuse est observée périodiquement à plusieurs instants présents t consécutifs et une cartographie bidimensionnelle est associée à chaque instant présent t ;

- pour réaliser l'étape c), à chaque instant présent t est calculée une cartographie bidimensionnelle prévisionnelle à un instant futur t+nP, où n entier non nul et P correspondant à une période de temps entre deux observations consécutives, en fonction des le cartographies bidimensionnelles établies à plusieurs instants passés t-mP, où m entier non nul ;
- pour réaliser l'étape d), pour chaque cartographie bidimensionnelle prévisionnelle à un instant futur t+nP est calculé un angle d'inclinaison optimal prévisionnel.

Avantageusement, lors de l'étape d), l'angle d'inclinaison optimal pour une cartographie bidimensionnelle prévisionnelle est calculé selon une méthode de calcul équivalente à celle employée lors de l'étape b) pour calculer l'angle d'inclinaison optimal pour une cartographie bidimensionnelle.

Autrement dit, le même type de calcul est mis en œuvre pour déterminer l'angle d'inclinaison optimal, que ce soit pour les observations réellement faites ou pour les prévisions qui sont issues d'un calcul prévisionnel, afin de garantir une adéquation entre les calculs.

Selon une possibilité ne faisant pas partie de l'invention, lors de l'étape e), l'asservissement de l'orientation du suiveur solaire est réalisé également en fonction de la consommation d'énergie nécessaire pour modifier l'orientation du suiveur solaire en partant d'un angle d'inclinaison présent jusqu'à atteindre un angle d'inclinaison optimal prévisionnel établi à un instant futur lors de l'étape d).

Autrement dit, l'asservissement effectif tient compte de cette consommation d'énergie afin de mettre en œuvre ou pas une orientation selon un angle d'inclinaison optimal futur (ou prévisionnel) dans le but d'anticiper un changement dans la couverture nuageuse.

Conformément à une autre caractéristique ne faisant pas partie de l'invention, lors de l'étape e), est établi un scénario potentiel au cours duquel l'angle d'inclinaison du suiveur solaire est modifié en partant d'un angle d'inclinaison présent jusqu'à atteindre un angle d'inclinaison optimal prévisionnel à un instant futur établi lors de l'étape d), et à ce scénario potentiel sont associés les calculs de :

- l'évolution de l'angle d'inclinaison du suiveur solaire au cours du changement d'orientation en partant de l'angle d'inclinaison présent jusqu'à atteindre l'angle d'inclinaison optimal prévisionnel, cette évolution dépendant de la vitesse de déplacement en rotation du suiveur solaire
- l'évolution de la consommation d'énergie nécessaire pour modifier l'orientation du suiveur solaire ;
- l'évolution de la production d'énergie solaire supplémentaire attendue avec un tel changement d'orientation ;
- l'évolution du rendement énergétique attendu basée sur la différence entre la production d'énergie solaire et la consommation d'énergie ;

et ensuite l'orientation du suiveur solaire est asservie sur ledit angle d'inclinaison optimal prévisionnel si le rendement énergétique est globalement positif pour le scénario, sinon l'orientation du suiveur solaire est maintenue à l'angle d'inclinaison présent.

Ainsi, l'asservissement selon un tel angle d'inclinaison optimal prévisionnel (ou futur) ne se fera qu'au titre d'un bénéfice énergétique, afin de ne pas en mettre en œuvre de changement d'orientation systématique à chaque changement dans la couverture nuageuse.

Selon une autre possibilité de l'invention, lors de l'étape e), l'asservissement de l'orientation du suiveur solaire est réalisé également en fonction d'un angle d'inclinaison dit direct établi par un calcul astronomique de la position du soleil.

Il est en effet intéressant de prendre en compte cet angle d'inclinaison direct, pour connaître la position du soleil et ainsi considérer une orientation directe en face du soleil dans la logique d'asservissement de l'étape e).

Dans ce cas, l'angle d'orientation présent dans le scénario précité peut correspondre à l'angle d'inclinaison direct, et l'asservissement tiendra compte du rendement énergétique potentiel calculé en cas de changement d'orientation de l'angle d'inclinaison direct vers l'angle d'inclinaison optimal prévisionnel.

Selon une autre possibilité de l'invention, lors de l'étape e), l'asservissement de l'orientation du suiveur solaire est réalisé également en fonction d'un taux d'usure d'organes mécaniques du suiveur solaire sollicités lors d'un changement d'orientation du suiveur solaire en partant d'un angle d'inclinaison présent jusqu'à atteindre un angle d'inclinaison optimal prévisionnel établi à un instant futur lors de l'étape d).

L'invention se rapporte également à un suiveur solaire mono-axe orientable autour d'un axe de rotation, du type comprenant une structure fixe d'ancrage au sol et une plateforme propre à supporter au moins un capteur solaire, ladite plateforme étant actionnable en rotation sur la structure fixe selon ledit axe de rotation au moyen d'un système d'actionnement, ledit suiveur solaire mono-axe étant caractérisé en ce qu'il comprend en outre un système d'observation de l'évolution dans le temps de la couverture nuageuse au-dessus du suiveur solaire mono-axe et une unité de contrôle en liaison, d'une part, avec le système d'observation pour recevoir ses données d'observations et, d'autre part, avec le système d'actionnement pour piloter la rotation de la plateforme, où ladite unité de contrôle comprend : un module cartographique prévu pour traduire ou convertir chaque observation faite par le système d'observation en une cartographie bidimensionnelle de la luminance solaire ; un module d'archivage qui archive chaque cartographie bidimensionnelle générée par le module cartographique; un module de calcul prévisionnel qui calcule des cartographies bidimensionnelles prévisionnelles de la luminance solaire pour des instants futurs sur la base des cartographies bidimensionnelles générées en temps réel par le module cartographique et sur la base des cartographies passées archivées dans le module d'archivage; un module de calcul d'angle d'inclinaison optimal qui calcule l'angle d'inclinaison optimal pour chaque cartographie bidimensionnelle générée et pour chaque cartographie bidimensionnelle prévisionnelle; un module d'évolution de l'angle d'inclinaison optimal qui récupère tous les angles d'inclinaison optimaux issus du module de calcul d'angle d'inclinaison optimal afin d'établir l'évolution de l'angle d'inclinaison optimal; un module de paramétrage du suiveur solaire qui comprend des paramètres relatifs à la vitesse de déplacement du système d'actionnement, des paramètres relatifs à la consommation d'énergie nécessaire au système d'actionnement pour un changement d'orientation, des paramètres relatifs à la production d'énergie solaire générée, et des paramètres relatifs à un taux d'usure des organes mécaniques du suiveur solaire mono-axe sollicités lors d'un changement d'orientation du suiveur solaire mono-axe ; un module de calcul astronomique qui calcul en temps réel l'angle d'inclinaison direct défini par la direction du rayonnement solaire direct au niveau du suiveur solaire mono-axe ; un module d'asservissement qui calcule l'asservissement de son angle d'inclinaison du suiveur solaire mono-axe, en fonction de l'évolution de l'angle d'inclinaison optimal provenant du module, des différents paramètres provenant du module et de l'angle d'inclinaison direct provenant du module, où ce module d'asservissement sort une consigne angulaire à destination du système d'actionnement afin de piloter des changements d'orientation de la plateforme du suiveur solaire mono-axe.

D'autres caractéristiques et avantages de la présente invention apparaîtront à la lecture de la description détaillée ci-après, d'exemples de mise en œuvre non limitatifs, faite en référence aux figures annexées dans lesquelles :

- la figure 1, déjà commentée, comprend quatre schémas (1a), (1b), (1c) et (1d) illustrant chacun deux suiveurs solaires dans différentes conditions météorologiques ;
- la figure 2 est une vue schématique d'un suiveur solaire mono-axe conforme à l'invention, où sont illustrés l'ensemble structure fixe et plateforme mobile et un système d'observation de l'évolution dans le temps de la couverture nuageuse ;
- la figure 3 est une vue schématique d'un premier exemple de système d'observation ;
- la figure 4 est une représentation schématique à plat d'un système d'observation équivalent à celui de la figure 3, et d'une cartographie de la luminance solaire (à droite) issue d'un tel système d'observation ;
- la figure 5 est une vue schématique d'un second exemple de système d'observation ;
- la figure 6 est une représentation schématique d'une observation (en haut à gauche) faite par un système d'observation équivalent à celui de la figure 5, et d'une cartographie de la luminance solaire (en bas à gauche) issue d'une telle l'observation, après plusieurs étapes de traitement d'image, et d'une matrice de valeurs de luminance équivalente (en bas à droite) issue de cette cartographie ;
- la figure 7a est une vue schématique de côté de quatre colonnes d'une cartographie de la luminance solaire, avec les angles d'azimut associés aux différentes colonnes, afin d'illustrer le calcul mis en œuvre pour le calcul d'une valeur de luminance équivalente servant à déterminer l'angle d'inclinaison optimal ;
- la figure 7b est une vue schématique de côté de quatre bandes d'une cartographie de la luminance solaire, avec les angles d'élévation ou d'inclinaison associés aux différentes bandes, afin d'illustrer le calcul mis en œuvre pour le calcul d'une valeur de luminance perçue servant à déterminer l'angle d'inclinaison optimal ;
- la figure 8 comprend quatre schémas (8a), (8b), (8c) et (8d) illustrant chacun une image avec la représentation d'un nuage observé à un instant passé (t-2), du même nuage observé à un instant passé (t-1), du même nuage observé à un instant présent (t) et du même nuage prévu par calcul prévisionnel à un instant futur (t+1) ;
- la figure 9 représente trois cartographies de la luminance solaire, auxquels sont associés en-dessous les angles d'inclinaison optimaux correspondants, dont une cartographie à un instant présent (t) et deux prévisions de cartographie à des instants futurs (t+1) et (t+n) ;
- la figure 10 est une représentation sous forme d'un schéma fonctionnel des éléments fonctionnels employés pour la mise en œuvre d'un procédé de pilotage conforme à l'invention ;
- la figure 11 représente cinq courbes prévisionnelles calculées pour un premier scénario potentiel défini lors de l'étape e) d'asservissement, avec de haut en bas, une courbe d'évolution de l'angle d'inclinaison optimal futur (ou prévisionnel) calculé lors de l'étape d), une courbe d'évolution de l'angle d'inclinaison du suiveur solaire, une courbe d'évolution de la consommation d'énergie nécessaire pour modifier l'orientation du suiveur solaire, une courbe d'évolution de la production d'énergie solaire supplémentaire attendue, et une courbe d'évolution du rendement énergétique attendu ;
- la figure 12 représente cinq courbes prévisionnelles (identiques à celles de la figure 11) calculées pour un second scénario potentiel.

En référence à la figure 2, un suiveur solaire 1 mono-axe orientable autour d'un axe de rotation A, du type comprenant une structure fixe 11 d'ancrage au sol constituée d'un ou plusieurs pylônes ancrés au sol, par exemple par battage, vissage, boulonnage, lestage, ou autre moyen équivalent permettant de fixer et stabiliser au sol la structure fixe 11.

Le suiveur solaire 1 comprend en outre une plateforme 12 mobile montée à rotation sur la structure fixe 11 selon l'axe de rotation A, et plus spécifiquement montée à rotation sur les extrémités supérieures du ou des pylônes. Cette plateforme 12 est propre à supporter au moins un capteur solaire 13, et notamment un ou plusieurs panneaux photovoltaïques.

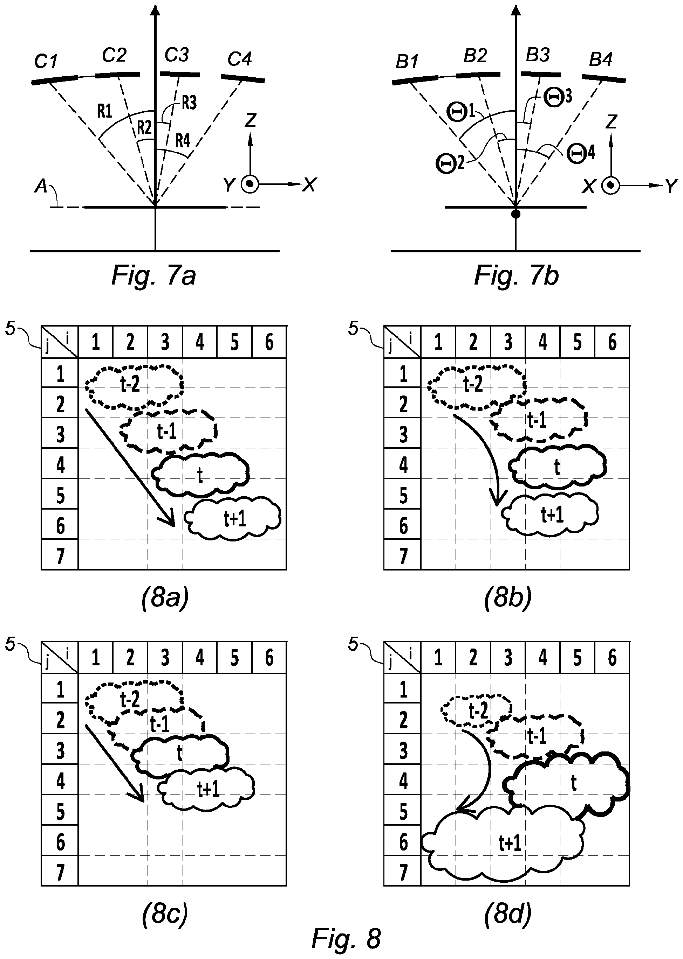

En référence à la figure 2 et aux figures 7a et 7b, l'axe de rotation A est substantiellement horizontal et dirigé selon un axe longitudinal X selon la direction nord-sud. Lorsque le suiveur solaire 1 est à plat (comme visible sur les figures 2, 7a et 7b) avec sa plateforme 12 horizontale, la plateforme 12 s'étend selon un plan horizontal défini par l'axe longitudinal X et par un axe transversal Y selon la direction est-ouest, de manière orthogonale à un axe vertical Z.

Pour la suite de la description, l'angle d'inclinaison du suiveur solaire 1 (ou angle d'inclinaison de la plateforme 12 et du ou des capteurs solaires 13) correspond à l'angle de la normale à la plateforme 12 vis-à-vis de l'axe vertical Z pris dans le plan (Y, Z). Ainsi, lorsque le suiveur solaire 1 est à plat, cet angle d'inclinaison est de 0 degré.

Le suiveur solaire 1 comprend également un système d'observation 2 de la couverture nuageuse au-dessus du suiveur solaire 1, autrement dit pour l'observation du ciel au-dessus du suiveur solaire 1. Ce système d'observation 2 peut être associé à un unique suiveur solaire 1 ou, de manière économique, être partagé avec plusieurs suiveurs solaires.

Le système d'observation 2 est fixe, et peut être surélevé par rapport au sol en étant par exemple monté sur un poteau 20.

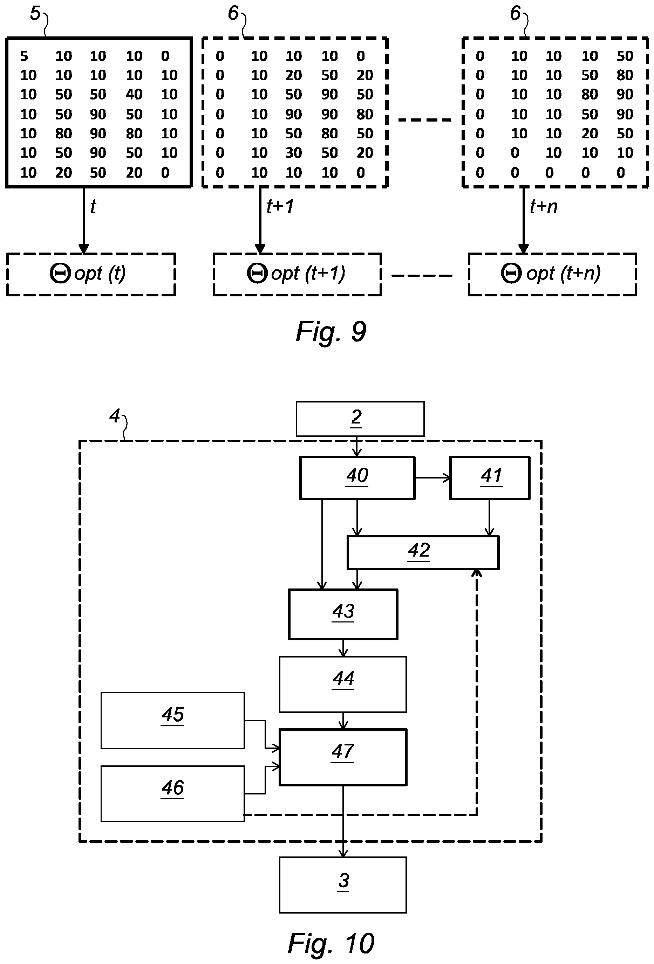

Le suiveur solaire 1 comprend en outre un système d'actionnement (non illustré sur la figure 2 et portant la référence numérique 3 sur la figure 10) qui assure la mise en rotation de la plateforme 12 selon l'axe de rotation A.

Ce système d'actionnement 3 comprend un actionneur, par exemple du type vérin (électrique, pneumatique ou hydraulique) ou moteur électrique (par exemple moteur rotatif). Ce système d'actionnement 3 comprend en outre un système mécanique de transmission du mouvement en sortie de l'actionneur (mouvement rotatif pour un moteur rotatif, ou mouvement linéaire pour un vérin) en un mouvement de rotation de la plateforme 12. Ce système mécanique de transmission peut être, à titre d'exemple non limitatif, un système à parallélogramme déformable, un système de renvoi par poulie, un système à pignon, un système à chaîne, un système à courroie, un système à crabot, un système avec arbre de transmission, un système à bielle, etc.

Il est envisageable que l'actionneur soit propre au suiveur solaire 1, ou bien soit partagé entre plusieurs suiveurs solaires. Dans le cas où l'actionneur est partagé, les plateformes 12 des différents suiveurs solaires sont avantageusement couplées en rotation, pour une rotation synchrone sous l'effet de l'actionneur commun.

En référence à la figure 10, le suiveur solaire 1 comprend également une unité de contrôle 4 du type carte électronique, qui est en liaison avec le système d'observation 2 afin de recevoir ses observations (ou données d'observations) et qui est également en liaison avec le système d'actionnement 3 pour piloter son fonctionnement et ainsi piloter la rotation de la plateforme 12, autrement dit l'orientation du suiveur solaire 1.

Cette unité de contrôle 4 comprend plusieurs modules, à savoir :

- un module cartographique 40 prévu pour traduire ou convertir chaque observation faite par le système d'observation 2 en une cartographie de la luminance solaire, en associant chaque cartographie à un instant temporel ;
- un module d'archivage 41 qui archive chaque cartographie générée par le module cartographique 40 ;
- un module de calcul prévisionnel 42 qui calcule une évolution future de la couverture nuageuse sur la base de l'évolution antérieure observée de la couverture nuageuse, et plus précisément calcule des cartographies prévisionnelles de la luminance solaire pour des instants futurs, ce module de calcul prévisionnel 42 réalisant ces calculs sur la base des cartographies générées en temps réel par le module cartographique 40 et sur la base des cartographies passées archivées dans le module d'archivage 41 ;

- un module de calcul d'angle d'inclinaison optimal 43 qui calcule l'angle d'inclinaison optimal pour chaque cartographie générée en temps réel par le module cartographique 40 (autrement dit l'angle d'inclinaison optimal à l'instant présent) et pour chaque cartographie prévisionnelle issue du module de calcul prévisionnel 42 (autrement dit les angles d'inclinaison optimaux pour instants futurs) ;
- un module d'évolution de l'angle d'inclinaison optimal 44 qui récupère tous les angles d'inclinaison optimaux issus du module de calcul d'angle d'inclinaison optimal 43 afin d'établir l'évolution de l'angle d'inclinaison optimal, et donc de prévoir et anticiper les changements d'angle d'inclinaison optimal ;
- un module de paramétrage du suiveur solaire 45 qui comprend des paramètres relatifs à la vitesse de déplacement du système d'actionnement 3 (et donc à la vitesse nécessaire pour un changement d'orientation), des paramètres relatifs à la consommation d'énergie nécessaire au système d'actionnement 3 pour un changement d'orientation, des paramètres relatifs à la production d'énergie solaire générée par le ou les capteurs solaires 13 en fonction de la luminance solaire reçue, et des paramètres relatifs à un taux d'usure des organes mécaniques du suiveur solaire 1 sollicités lors d'un changement d'orientation du suiveur solaire 1, ces paramètres étant notamment fonction de l'écart angulaire entre le début et la fin d'un changement d'orientation ;
- un module de calcul astronomique 46 qui calcul en temps réel la position du soleil, et donc l'angle d'inclinaison direct défini par la direction du rayonnement solaire direct au niveau du suiveur solaire 1 ;
- un module d'asservissement 47 qui calcule l'asservissement de l'orientation du suiveur solaire 1, autrement dit l'asservissement de son angle d'inclinaison, en fonction de l'évolution de l'angle d'inclinaison optimal provenant du module 44, des différents paramètres provenant du module 45 et de l'angle d'inclinaison direct provenant du module 46, où ce module d'asservissement 47 sort une consigne angulaire à destination du système d'actionnement 3 afin de piloter des changements d'orientation de la plateforme 12 du suiveur solaire 1.

Il est à noter que cette unité de contrôle 4 peut être propre au suiveur solaire 1, ou bien être partagée entre plusieurs suiveurs solaires, et de préférence entre plusieurs suiveurs solaires réunis en ligne (s'étendant de nord en sud) au sein d'installations solaires linéaires.

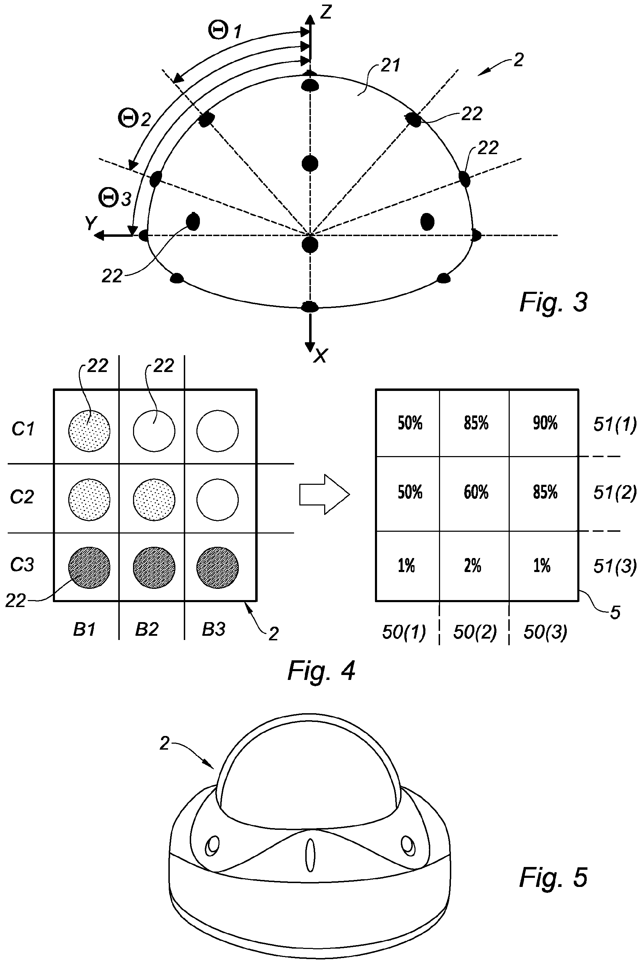

Dans un premier mode de réalisation illustré sur la figure 3, le système d'observation 2 comprend un support 21, notamment en forme de dôme hémisphérique, supportant des cellules photosensibles 22.

Ces cellules photosensibles 22 sont positionnées le long de plusieurs bandes (ou lignes) réparties selon plusieurs angles dits d'élévation $\Theta i$ qui sont mesurés vis-à-vis de l'axe vertical Z dans le plan (Y, Z), le repère (X, Y, Z) étant centré sur le centre O du dôme hémisphérique 21. L'angle d'élévation $\Theta i$ est donc à rapprocher de l'angle d'inclinaison du suiveur solaire 1. Dans l'exemple de la figure 3, les cellules photosensibles 22 sont réparties selon sept bandes à des angles d'élévation de 0, + $\Theta 1$, + $\Theta 2$, + $\Theta 3$, - $\Theta 1$, - $\Theta 2$ et - $\Theta 3$ ; avec par exemple $[\Theta 1]$=30 degrés, $[\Theta 2]$=60 degrés et $[\Theta 3]$=90 degrés. Ces angles d'élévation $\Theta i$ sont également visibles sur la figure 7b.

Sur chaque bande sont présentes une voire plusieurs cellules photosensibles 22. Dans le cas d'une bande de plusieurs cellules photosensibles 22, les cellules photosensibles 22 d'une même bande sont réparties selon plusieurs angles dits d'azimut Rj qui sont mesurés vis-à-vis de l'axe vertical Z dans le plan (X, Z). Ainsi, en plus d'être réparties selon les bandes à différents angles d'élévation $\Theta i$, les cellules photosensibles 22 sont également réparties selon des colonnes à différents angles d'azimut Rj. Ces angles d'azimut Rj sont visibles sur la figure 7a.

De manière générale, plus le premier système d'observation 2 comprend de cellules photosensibles 22, et en particulier plus le système d'observation 2 comprend de bandes de cellules photosensibles 22, et meilleure seront la résolution et la précision angulaire.

Ces cellules photosensibles 22 peuvent être de la même technologie que les panneaux photovoltaïques 13 afin de pouvoir appliquer une pondération dépendant de la gamme de longueur d'onde utile aux panneaux photovoltaïques 13. De préférence, ces cellules photosensibles 22 feront l'objet d'un étalonnement préalable pour obtenir une meilleure précision.

Ainsi, avec un tel premier système d'observation 2, en récupérant les mesures de la luminosité de chaque cellule photosensible 22 et en connaissant les angles d'élévation $\Theta i$ (ou angles d'inclinaison associées) des différentes bandes et les angles d'azimut Rj des différentes colonnes, le module cartographique 40 convertit une observation faite par le système d'observation 2 en une cartographie 5 de la luminance solaire.

Cette cartographie 5 constitue une cartographie bidimensionnelle dans le sens où elle forme une carte (ou matrice) de luminance solaire répartie selon :

- plusieurs bandes 50(i) (i entier) établies selon une première direction parallèle à l'axe de rotation A (et donc parallèle à l'axe X) et associées respectivement à différents angles d'élévation ou d'inclinaison Oi, de sorte que chaque bande 50(i) correspond à un angle d'inclinaison $\Theta i$ du suiveur solaire 1 ; et
- plusieurs colonnes 51(j) (j entier) établies selon une seconde direction horizontale et orthogonale à l'axe de rotation A (et donc parallèle à l'axe Y) et associées respectivement à différents angles d'azimut Rj.

Ainsi, la cartographie 5 comprend N cases (où N correspond au nombre de cellules photosensibles 22 et N=[i x j]) et à chaque case correspond une valeur (absolue ou relative) de luminance solaire Lum(i, j).

Sur la figure 4 à gauche, un exemple de premier système d'observation 2 est illustré schématiquement à plat et comprend neuf cellules photosensibles 22 réparties selon trois bandes B1, B2, B3 qui sont associées à trois angles d'élévation (ou angles d'inclinaison), et selon trois colonnes C1, C2, C3 qui sont associées à trois angles d'azimut. A ce premier système d'observation 2 correspond une cartographie 5 avec trois bandes 50(1), 50(2), 50(3) et trois colonnes 51(1), 51(2), 51(3), et où les valeurs de luminance solaire sont exprimées de manière relative en pourcentage.

Dans un second mode de réalisation illustré sur la figure 5, le système d'observation 2 comprend une caméra, notamment du type caméra hémisphérique, afin d'extraire des images du ciel.

De manière avantageuse, le second système d'observation 2 (appelé par la suite caméra) est conformé pour prendre des images dans une largeur spectrale suffisante pour la technologie des capteurs solaires 13, et notamment du ou des panneaux photovoltaïques.

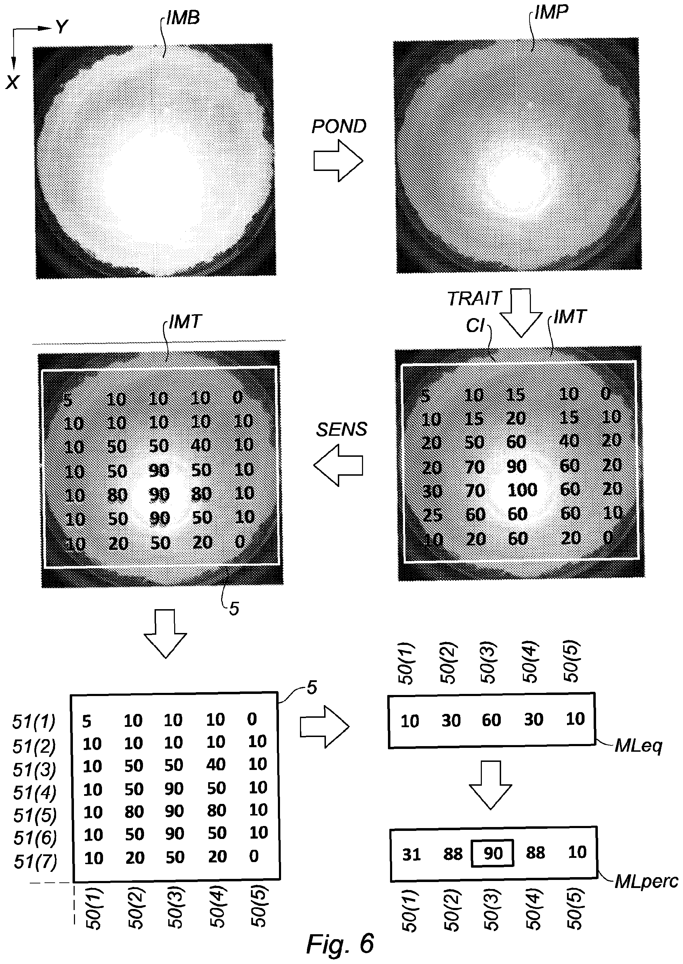

En se référant à la figure 6, la caméra 2 délivre une image brute IMB du ciel qui est ensuite délivré au module cartographique 40 pour convertir cette image brute IMB (ou observation) en une cartographie 5 bidimensionnelle de la luminance solaire. A cette image brute IMB bidimensionnelle est associé un repère (X, Y), ces axes X et Y ayant déjà été définis ci-avant.

Le module cartographique 40 met en œuvre une succession d'étapes de traitement d'image pour partir de l'image brute IMB jusqu'à la cartographie 5.

Dans une première étape POND, le module cartographique 40 met en œuvre une pondération fréquentielle appliquée sur l'image brute IMB (ou signal vidéo) récupéré, pour obtenir une image dite pondérée IMP ; cette pondération fréquentielle consistant à appliquer un filtre fréquentiel sur l'observation (soit l'observation faite par les cellules photosensibles 22 soit l'observation faite la caméra) qui est fonction à la fois de la réponse en fréquence du système d'observation 2 (que ce soit les cellules photosensibles 22 ou la caméra) et de la bande fréquentielle utile (ou réponse spectrale) aux panneaux photovoltaïques 13.

Dans une seconde étape TRAIT, le module cartographique 40 met en œuvre un traitement de l'image pondérée IMP consistant à corriger l'image des défauts (traitement de suppression du bruit, traitement de l'éblouissement ou « blooming », traitement de la saturation, ...) pour obtenir une image dite traitée IMT. Puis, le module cartographique 40 met en œuvre un calcul (soit pixel par pixel, soit zone par zone où chaque zone comprend plusieurs pixels) de la répartition de la luminance solaire sur la l'image traitée IMT afin de générer une cartographie initiale CI formant une carte (ou matrice) de luminance solaire répartie selon plusieurs bandes associées respectivement à différents angles d'élévation ou d'inclinaison Θ(i) et selon plusieurs colonnes associées respectivement à différents angles d'azimut ; une telle cartographie initiale étant équivalente a celle déjà été décrite ci-dessus. Sur la figure 6, les valeurs de luminance solaire de la cartographie initiale CI sont exprimées de manière relative en pourcentage.

Dans une troisième étape SENS, le module cartographique 40 applique sur la cartographie initiale CI un coefficient dépendant de la variation de la sensibilité de la caméra 2, afin de générer une cartographie 5 du même type que la cartographie décrite ci-dessus. En effet, l'amplitude (ou luminosité) des données délivrées par la caméra 2 est proportionnellement liée à la valeur du rayonnement solaire, de sorte que ce coefficient prend en compte cette proportionnalité dépendant de la variation de la sensibilité de la caméra 2.

Ainsi, le module cartographique 40 génère une cartographie 5 formant une carte (ou matrice) de luminance solaire répartie selon plusieurs bandes 50(i) associées respectivement à différents angles d'élévation ou d'inclinaison Θi et selon plusieurs colonnes 51(j) associées respectivement à différents angles d'azimut Rj. Dans l'exemple de la figure 6, la cartographie 5 comprend cinq bandes 50(1), ..., 50(5) et sept colonnes 51(1), ..., 51(7), et les valeurs de luminance solaire sont exprimées de manière relative en pourcentage.

La résolution de la cartographie 5 (autrement dit le nombre de bandes et de colonnes) et donc la précision angulaire dépendent de la finesse du traitement d'image mis en œuvre par le module cartographique 40, et également de la sensibilité et de la résolution du système d'observation 2. Pour le premier système d'observation avec des cellules photosensibles 22, cette sensibilité dépend de la sensibilité des cellules photosensibles 22, et cette résolution dépend du nombre et de la répartition des cellules photosensibles 22. Pour le second système d'observation 2 du type caméra, cette sensibilité et cette résolution dépendent de la qualité de la caméra.

A partir d'une telle cartographie 5 (qu'elle soit issue de l'un ou l'autre des deux systèmes d'observation 2 décrits ci-dessus), le module de calcul d'angle d'inclinaison optimal 43 met en œuvre un calcul basé sur cette cartographie 5 pour extraire un angle d'inclinaison optimal Θopt qui correspond à l'angle d'inclinaison (ou angle d'élévation) auquel est associée un maximum de luminance solaire.

Pour ce calcul, et en se référant aux figures 6 et 7, le module de calcul d'angle d'inclinaison optimal 43 met en œuvre une succession de sousétapes. Cette succession de sous-étape constitue un exemple de mode de calcul ou d'algorithme, et l'invention ne saurait bien entendu pas se limiter à cet exemple.

Dans une première sous-étape, le module de calcul d'angle d'inclinaison optimal 43 calcule, pour chaque bande 50(i) de la cartographie 5, une valeur de luminance équivalente Leq(i) à partir de l'ensemble des valeurs de luminance L(i, j) prises dans la bande 50(i). Pour chaque bande 50(i), la valeur de luminance équivalente Leq(i) de la bande 50(i) est fonction des valeurs de luminance L(i, j) prises dans la bande 50(i) et des angles d'azimut Rj des différentes colonnes 51(j) selon la formule suivante (en se référant à la figure 7a) :

$$Leq(i) = \sum_j Lum(i,j) \times \cos Rj$$

On obtient ainsi une matrice MLeq des valeur de luminance équivalente Leq(i) associées aux différentes bandes 50(i).

Dans une seconde sous-étape, le module de calcul d'angle d'inclinaison optimal 43 calcule, pour chaque bande 50(i) de la cartographie 5, une valeur de luminance perçue Lperc(i) par le support suiveur 1 à partir des valeurs de luminance équivalentes Leq(i) calculées pour toutes les bandes lors de la première sous-étape, et à partir des angles d'inclinaison (ou d'élévation) Θi associés aux bandes 50(i), selon la formule suivante (en se référant à la figure 7b) :

$$Lperc(i) = \sum_k Leq(k) \times \cos(\theta i - \theta k) \times p(i,k)$$

Où p(i, k) = 1 si abs($\Theta$i - $\Theta$k)<90 degrés, et p(i, k) = 0 sinon.

Le coefficient tient compte que, au-delà d'un écart angulaire de 90 degrés, le rayonnement n'est pas reçu par le ou les capteurs solaires plans.

On obtient ainsi une matrice MLperc des valeur de luminance perçue Lperc(i) associées aux différentes bandes 50(i).

Dans une dernière sous-étape, le module de calcul d'angle d'inclinaison optimal 43 retient l'angle d'inclinaison optimal $\Theta$opt comme étant l'angle d'inclinaison (ou d'élévation) associé à la bande présentant la valeur de luminance perçue Lperc(i) la plus élevée.

Le module de calcul prévisionnel 42 calcule des cartographies prévisionnelles 6 de la luminance solaire pour des instants futurs (t+nP), où n entier non nul et P la période de l'observation réalisée de manière périodique et répétitive par le système d'observation 2. Ces cartographies prévisionnelles 6 sont établies sur la base des cartographies 5 générées en temps réel par le module cartographique 40 et sur la base des cartographies 5 passées archivées dans le module d'archivage 41.

La figure 8 illustre quatre exemples de situation d'une couverture nuageuse évoluant au cours, avec quatre schémas 8a, 8b, 8c et 8d représentant chacun une image avec la représentation d'un nuage observé à un instant passé (t-2), du même nuage observé à un instant passé (t-1), du même nuage observé à un instant présent (t) et du même nuage prévu par calcul prévisionnel à un instant futur (t+1) (la période P vaut 1 sur la figure 8).

Le calcul prévisionnel est basé sur une prise en considération de l'évolution passée de la luminance solaire, entre plusieurs instants passés et l'instant présent, et en particulier de l'évolution de la répartition de la luminance solaire et de la vitesse d'évolution de la luminance solaire.

Ce calcul prévisionnel peut être basé sur une fenêtre temporelle glissante, c'est-à-dire une fenêtre comprenant un nombre prédéfini des dernières cartographies passées.

Ce calcul prévisionnel est employé pour établir des cartographies prévisionnelles 6 (ou prévisions de cartographie) à court-terme. A titre d'exemple non limitatif, la notion de court-terme couvre des calculs sur un horizon futur d'un maximum de dix à trente minutes, voire d'un maximum d'une à deux heures. Il est bien entendu envisageable de prévoir des calculs prédictifs à plus long terme.

L'algorithme mis en œuvre pour un tel calcul prévisionnel peut éventuellement intégrer des améliorations telles que :

- la prise en compte des erreurs de prévision pour améliorer les prévisions futures (en effet, il est possible de comparer les cartographies présentes avec les prévisions cartographiques faites plus tôt, afin d'en tirer des enseignements sur le calcul prévisionnel et l'améliorer) ;
- reconnaitre les types de nuage en fonction de la cartographie grâce à une base de données et/ou grâce à des analyses ou relevés effectués dans le passé, de manière à permettre de faire des prévisions à plus long terme en fonction des types de nuages.

L'algorithme mis en œuvre pour un tel calcul prévisionnel peut également tenir compte de l'évolution de la position du soleil dans le ciel, en particulier si le calcul prévisionnel se fait pour des instants futurs suffisamment lointains (par exemple au-delà de 30 minutes) pour que le changement de la position du soleil ait une influence sur l'évolution de la luminance solaire. Cette prise en compte de la position du soleil dans le calcul prévisionnel est illustrée par la flèche de liaison en trait interrompu sur la figure 10 entre le module de calcul prévisionnel 42 et le module de calcul astronomique 46.

Comme visible sur la figure 9, le module de calcul prévisionnel 42 établit des cartographies prévisionnelles 6, et à chaque cartographie prévisionnelle 6 est associé un angle d'inclinaison optimale $\Theta$opt prévisionnel calculé par le module de calcul d'angle d'inclinaison optimal 43, selon la même méthode de calcul précédemment décrite.

Ainsi, le module d'évolution de l'angle d'inclinaison optimal 44 récupère tous les angles d'inclinaison optimaux (ceux des cartographies passées, ceux de la cartographie présente, et ceux des cartographies prévisionnelles 6) et établi une évolution future de l'angle d'inclinaison optimal $\Theta$opt. et donc de prévoir et anticiper les changements d'angle d'inclinaison optimal

Enfin, le module d'asservissement 47 asservit l'orientation du suiveur solaire 1 en fonction de l'évolution passée et future de l'angle d'inclinaison optimal $\Theta$opt, et aussi en fonction de la consommation d'énergie Cons nécessaire pour modifier l'orientation du suiveur solaire 1, de la vitesse de déplacement en rotation du suiveur solaire 1, et de la production d'énergie solaire Prod supplémentaire obtenue avec un changement d'orientation.

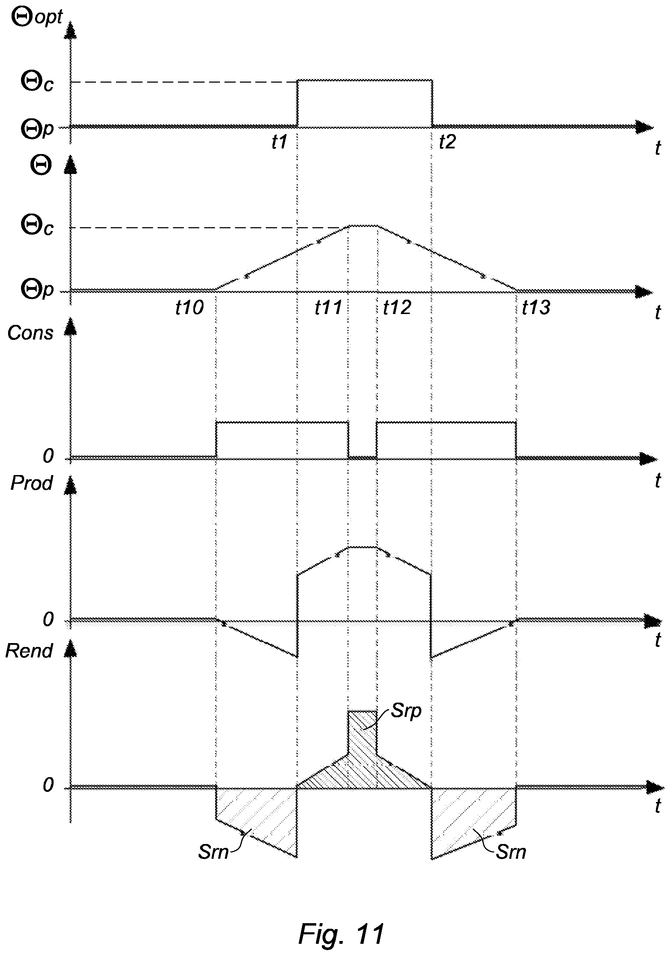

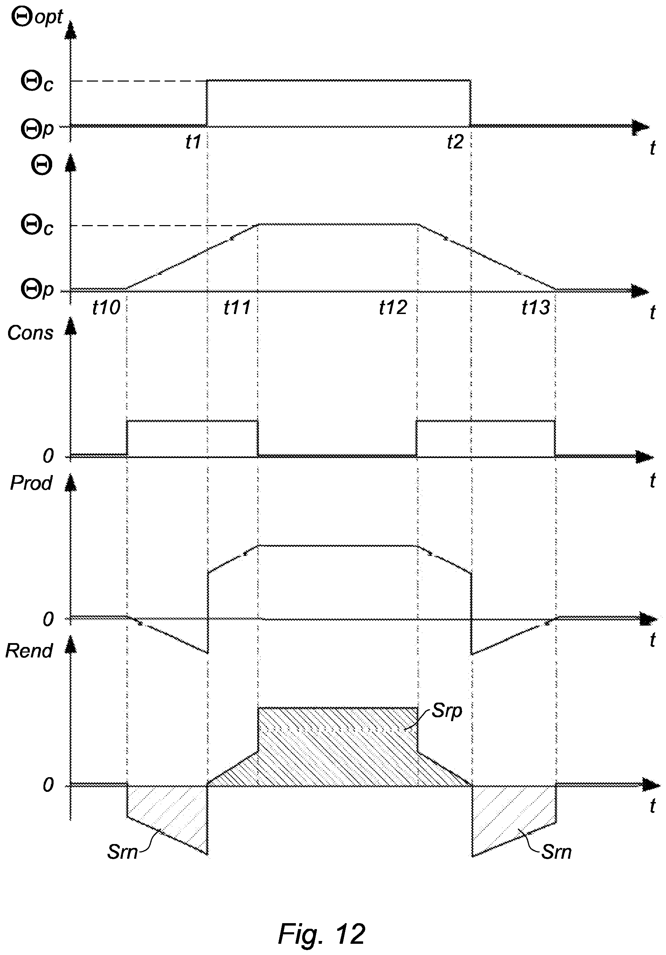

En référence aux figures 11 et 12, le module d'asservissement 47 se base de l'évolution future de l'angle d'inclinaison optimal $\Theta$opt (première courbe en partant du haut).

Dans l'exemple donné, l'angle d'inclinaison optimal Oopt prévisionnel change de valeur pour atteindre une valeur cible Oc, par exemple du fait d'une prévision de passage d'un nuage devant le soleil, de l'instant futur t1 jusqu'à l'instant futur t2, avant de revenir à sa valeur initiale.

Le module d'asservissement 47 établi un scénario potentiel au cours duquel l'angle d'inclinaison Θ du suiveur solaire 1 est modifié en partant d'un angle d'inclinaison présent Θp jusqu'à atteindre l'angle d'inclinaison optimal futur ou prévisionnel, en l'occurrence suivre la prévision d'évolution de l'angle d'inclinaison optimal.

Dans l'exemple donné, le scénario consiste à asservir l'angle d'inclinaison Θ sur la première courbe, et cet asservissement dépend de la vitesse de déplacement en rotation du suiveur solaire 1, afin d'obtenir une deuxième courbe de l'évolution de l'angle d'inclinaison Θ du suiveur solaire 1 au cours du changement d'orientation du scénario. En effet, le suiveur solaire 1 présente un temps de déplacement nécessaire pour arriver à atteindre l'angle d'inclinaison optimal cible Θc.

Grâce au calcul prévisionnel, le déplacement du suiveur solaire 1 est anticipé, en l'occurrence en démarrant plus tôt à l'instant t10 (antérieur à t1) jusqu'à atteindre la valeur cible Θc à t11 (postérieur à t1), puis en démarrant de manière anticipée le retour à l'instant t11 (antérieur à t2) jusqu'à revenir à l'angle d'inclinaison présent Θp à l'instant t13 (postérieur à t2).

Le module d'asservissement 47 détermine l'évolution de la consommation d'énergie Cons nécessaire pour modifier l'orientation du suiveur solaire selon la deuxième courbe, afin d'obtenir une troisième courbe de l'évolution de cette consommation d'énergie Cons ; le suiveur solaire 1 consommant durant les phases de changement d'orientation, entre les instants t10 et t11 puis entre les instants t12 et t13.

Le module d'asservissement 47 détermine l'évolution de la production Prod supplémentaire (ou gain de production) attendue en suivant la deuxième courbe d'évolution de l'angle d'inclinaison Θ plutôt qu'en restant à l'angle d'inclinaison présent Op, afin d'obtenir une quatrième courbe de l'évolution de cette production Prod. Cette production Prod supplémentaire correspond donc au gain de production attendu si l'on suit le scénario plutôt que de rester à la situation initiale ou présente sur l'angle présent Θp.

Dans l'exemple donné, la production Prod est négative entre les instants t10 et t1 et entre les instants t2 et t13 qui correspondent à des périodes où l'angle d'inclinaison Θ s'éloigne de l'angle d'inclinaison Oopt, et la production Prod est positive entre les instants t1 et t2 qui correspondent à une période où l'angle d'inclinaison Θ se rapproche de voire est égal à l'angle d'inclinaison Θopt.

Le module d'asservissement 47 détermine l'évolution du rendement énergétique Rend attendu basée sur la différence entre la production Prod et la consommation d'énergie Cons, donnant une cinquième courbe correspondant à la différence entre la quatrième courbe et la troisième courbe, autrement dit Rend = Prod - Cons.

Dans l'exemple donné, le rendement Rend est négatif entre les instants t10 et t1 et entre les instants t2 et t13, et le rendement Rend est positif entre les instants t1 et t2.

Enfin, le module d'asservissement 47 suit le scénario (autrement dit asservit le suiveur solaire selon la deuxième courbe) si le rendement énergétique est globalement positif pour le scénario, sinon l'orientation du suiveur solaire 1 est maintenue à l'angle d'inclinaison présent Θp.

Le rendement énergétique global est établi en étudiant le rendement sur toute la période du scénario.

Dans l'exemple de la figure 11, le rendement global est négatif, car la somme des surfaces Srn où le rendement est négatif (entre t10 et t1 et entre t2 et t13) est supérieure à la surface Srp où le rendement est positif (entre t1 et t2). L'exemple de la figure 11 correspond par exemple à une situation où le temps de passage prévisionnel (correspondant à l'intervalle [t2 - t1]) d'un nuage devant le soleil est trop court comparativement au temps nécessaire pour un changement d'orientation (correspondant à l'intervalle [t1 - t10] ou [t13 - t2]).

Dans l'exemple de la figure 12, le rendement global est positif, car la somme des surfaces Srn où le rendement est négatif (entre t10 et t1 et entre t2 et t13) est inférieure à la surface Srp où le rendement est positif (entre t1 et t2). L'exemple de la figure 12 correspond par exemple à une situation où le temps de passage prévisionnel (correspondant à l'intervalle [t2 - t1]) d'un nuage devant le soleil est long comparativement au temps nécessaire pour un changement d'orientation (correspondant à l'intervalle [t1 - t10] ou [t13 - t2]).

Ainsi, dans l'exemple de la figure 11, le module d'asservissement 47 ne suit pas le scénario et maintient l'orientation à la valeur présente Θp, tandis que dans l'exemple de la figure 12, le module d'asservissement 47 suit le scénario et assure un asservissement de l'angle d'inclinaison selon la deuxième courbe.

Bien entendu l'exemple de mise en œuvre évoqué ci-dessus ne présente aucun caractère limitatif et d'autres améliorations et détails peuvent être apportés au suiveur solaire selon l'invention, sans pour autant sortir du cadre de l'invention où d'autres types de structure fixe ou de plateforme peuvent par exemple être réalisés.

**Revendications**

1. Procédé de pilotage de l'orientation d'un suiveur solaire (1) mono-axe orientable autour d'un axe de rotation (A), ledit procédé mettant en œuvre les étapes suivantes :

    a) observer l'évolution dans le temps de la couverture nuageuse au-dessus du suiveur solaire (1) mono-axe, en observant la couverture nuageuse à plusieurs instants consécutifs au moyen d'un système d'observation (2) du ciel au-dessus du suiveur solaire (1) mono-axe ;

b) traduire chaque observation de la couverture nuageuse en une cartographie (5) bidimensionnelle de la luminance solaire et déterminer l'évolution dans le temps d'un angle d'inclinaison optimal ($\Theta$opt) du suiveur solaire (1) mono-axe, en fonction de la couverture nuageuse observée, en calculant pour chaque cartographie (5) bidimensionnelle à chaque instant un angle d'inclinaison optimal ($\Theta$opt) ;

c) prévoir l'évolution future de la couverture nuageuse sur la base de l'évolution antérieure observée de la couverture nuageuse, en calculant à chaque instant présent au moins une cartographie prévisionnelle (6) de la luminance solaire à un instant futur, en mettant en œuvre un calcul prévisionnel prenant en considération une évolution de la répartition de la luminance solaire sur des cartographies (5) bidimensionnelles établies à plusieurs instants passés ;

d) calculer l'évolution future de l'angle d'inclinaison optimal ($\Theta$opt) en fonction de la prévision de l'évolution future de la couverture nuageuse, en calculant pour chaque cartographie bidimensionnelle prévisionnelle (6) un angle d'inclinaison optimal ($\Theta$opt) prévisionnel à un instant futur associé à un maximum de luminance solaire sur ladite prévisionnelle (6) ; et

e) asservir l'orientation du suiveur solaire (1) mono-axe en fonction d'un taux d'usure d'organes mécaniques du suiveur solaire (1) mono-axe sollicités lors d'un changement d'orientation du suiveur solaire (1) mono-axe en partant d'un angle d'inclinaison présent ($\Theta\rho$) jusqu'à atteindre un angle d'inclinaison optimal ($\Theta$opt) prévisionnel.

2. Procédé de pilotage selon revendication 1, dans lequel l'observation de la couverture nuageuse est réalisée selon l'une des méthodes suivantes :

   - prise d'images du ciel à partir du sol au moyen d'un appareil de prise de vue ;
   - mesure de la luminance solaire à partir du sol au moyen d'un ensemble de plusieurs cellules photosensibles ;
   - récupération d'images satellites du ciel au-dessus du suiveur solaire (1) mono-axe.

3. Procédé de pilotage selon l'une quelconque des revendications précédentes, dans lequel, lors de l'étape b), est mise en œuvre une étape de pondération fréquentielle appliquée sur l'observation qui est fonction à la fois d'une réponse en fréquence du système d'observation (2) et d'une bande fréquentielle utile au capteur solaire.

4. Procédé de pilotage selon l'une quelconque des revendications précédentes, dans lequel :

   - pour réaliser l'étape a), la couverture nuageuse est observée périodiquement à plusieurs instants présents t consécutifs et une cartographie (5) bidimensionnelle est associée à chaque instant présent t ;
   - pour réaliser l'étape c), à chaque instant présent t est calculée une cartographie bidimensionnelle prévisionnelle (6) à un instant futur t+nP, où n entier non nul et P correspondant à une période de temps entre deux observations consécutives, en fonction des le cartographies (5) bidimensionnelles établies à plusieurs instants passés t-mP, où m entier non nul ;
   - pour réaliser l'étape d), pour chaque cartographie bidimensionnelle prévisionnelle (6) à un instant futur t+nP est calculé un angle d'inclinaison optimal ($\Theta$opt) prévisionnel.

5. Procédé de pilotage selon l'une quelconque des revendications précédentes, dans lequel, lors de l'étape d), l'angle d'inclinaison optimal ($\Theta$opt) pour une cartographie bidimensionnelle prévisionnelle (6) est calculé selon une méthode de calcul équivalente à celle employée lors de l'étape b) pour calculer l'angle d'inclinaison optimal ($\Theta$opt) pour une cartographie bidimensionnelle (5).

6. Procédé de pilotage selon l'une quelconque des revendications précédentes, dans lequel, lors de l'étape e), l'asservissement de l'orientation du suiveur solaire (1) mono-axe est réalisé également en fonction d'un angle d'inclinaison dit direct établi par un calcul astronomique de la position du soleil.

7. Procédé de pilotage selon revendication 6, dans lequel l'angle d'orientation présent correspond à l'angle d'inclinaison direct.

8. Suiveur solaire (1) mono-axe orientable autour d'un axe de rotation (A), du type comprenant une structure fixe (11) d'ancrage au sol et une plateforme (12) propre à supporter au moins un capteur solaire (13), ladite plateforme (12) étant actionnable en rotation sur la structure fixe (11) selon ledit axe de rotation (A) au moyen d'un système d'actionnement (3), ledit suiveur solaire (1) mono-axe étant **caractérisé en ce qu'**il comprend en outre un système d'observation (2) de l'évolution dans le temps de la couverture nuageuse au-dessus du suiveur solaire (1) mono-axe et une unité de contrôle (4) en liaison, d'une part, avec le système d'observation (2) pour recevoir ses données d'observations et, d'autre part, avec le système d'actionnement (3) pour piloter la rotation de la plateforme (12), où ladite unité de contrôle (4) comprend :

un module cartographique (40) prévu pour traduire ou convertir chaque observation faite par le système d'observation (2) en une cartographie (5) bidimensionnelle de la luminance solaire ;

un module d'archivage (41) qui archive chaque cartographie (5) bidimensionnelle générée par le module cartographique (40) ;

un module de calcul prévisionnel (42) qui calcule des cartographies bidimensionnelles prévisionnelles (6) de la luminance solaire pour des instants futurs sur la base des cartographies (5) bidimensionnelles générées en temps réel par le module cartographique (40) et sur la base des cartographies passées archivées dans le module d'archivage (41) ;

un module de calcul d'angle d'inclinaison optimal (43) qui calcule l'angle d'inclinaison optimal ($\Theta$opt) pour chaque cartographie (5) bidimensionnelle générée et pour chaque cartographie bidimensionnelle prévisionnelle (6) ;

un module d'évolution de l'angle d'inclinaison optimal (44) qui récupère tous les angles d'inclinaison optimaux ($\Theta$opt) issus du module de calcul d'angle d'inclinaison optimal (43) afin d'établir l'évolution de l'angle d'inclinaison optimal ($\Theta$opt) ;

un module de paramétrage du suiveur solaire (45) qui comprend des paramètres relatifs à la vitesse de déplacement du système d'actionnement (3), des paramètres relatifs à la consommation d'énergie nécessaire au système d'actionnement (3) pour un changement d'orientation, des paramètres relatifs à la production d'énergie solaire générée, et des paramètres relatifs à un taux d'usure des organes mécaniques du suiveur solaire (1) mono-axe sollicités lors d'un changement d'orientation du suiveur solaire (1) mono-axe ;

un module de calcul astronomique (46) qui calcul en temps réel l'angle d'inclinaison direct défini par la direction du rayonnement solaire direct au niveau du suiveur solaire (1) mono-axe ;

un module d'asservissement (47) qui calcule l'asservissement de son angle d'inclinaison ($\Theta$) du suiveur solaire (1) mono-axe, en fonction de l'évolution de l'angle d'inclinaison optimal provenant du module (44), des différents paramètres provenant du module (45) et de l'angle d'inclinaison direct provenant du module (46), où ce module d'asservissement (47) sort une consigne angulaire à destination du système d'actionnement (3) afin de piloter des changements d'orientation de la plateforme (12) du suiveur solaire (1) mono-axe.

9. Suiveur solaire (1) mono-axe selon revendication 8, dans lequel ledit suiveur solaire (1) mono-axe comprend :

un appareil de prise de vue conformé pour prendre des images du ciel à partir du sol; et/ou

un ensemble de plusieurs cellules photosensibles conformées pour mesurer la luminance solaire à partir du sol; et/ou

un module conformé pour récupérer des images satellites du ciel au-dessus du suiveur solaire (1) mono-axe.

**Patentansprüche**

1. Verfahren zur Steuerung der Ausrichtung eines einachsigen solaren Folgeelementes (1), das um eine Drehachse (A) herum ausrichtbar ist, wobei bei dem besagten Verfahren die folgenden Schritte ausgeführt werden:

a) Beobachten der Entwicklung über die Zeit der Wolkenbedeckung über dem einachsigen solaren Folgeelement (1), indem die Wolkenbedeckung zu mehreren aufeinanderfolgenden Zeitpunkten mittels eines Beobachtungssystems (2) für den Himmel über dem einachsigen solaren Folgeelement (1) beobachtet wird;

b) Übersetzen jeder Beobachtung der Wolkenbedeckung in eine zweidimensionale Kartierung (5) der solaren Leuchtdichte und Bestimmen der Entwicklung eines optimalen Neigungswinkels ($\theta$opt) des einachsigen solaren Folgeelementes (1) über die Zeit, in Abhängigkeit von der beobachteten Wolkenbedeckung, indem für jede zweidimensionale Kartierung (5) zu jedem Zeitpunkt ein optimaler Neigungswinkel ($\theta$opt) berechnet wird;

c) Vorhersehen der zukünftigen Entwicklung der Wolkenbedeckung auf Grundlage der beobachteten vorherigen Entwicklung der Wolkenbedeckung, indem zu jedem aktuellen Zeitpunkt mindestens eine vorausschauende Kartierung (6) der solaren Leuchtdichte zu einem zukünftigen Zeitpunkt berechnet wird, indem eine vorausschauende Berechnung ausgeführt wird, welche eine Entwicklung der Verteilung der solaren Leuchtdichte auf der zweidimensionalen Kartierung (5) berücksichtigt, welche an mehreren Zeitpunkten in der Vergangenheit ermittelt wurde;

d) Berechnen der zukünftigen Entwicklung des optimalen Neigungswinkels ($\theta$opt) in Abhängigkeit der Vorher-

sage der zukünftigen Entwicklung der Wolkenbedeckung, indem für jede vorhergesagte zweidimensionale Kartierung (6) ein vorhergesagter optimaler Neigungswinkel (θopt) zu einem zukünftigen Zeitpunkt berechnet wird, der mit einer maximalen solaren Leuchtdichte auf der besagten Vorhergesagten (6) verbunden ist; und

e) Steuern der Ausrichtung des einachsigen solaren Folgeelementes (1) in Abhängigkeit einer Abnutzungsrate der mechanischen Bestandteile des einachsigen solaren Folgeelementes (1), welche während einer Änderung der Ausrichtung des einachsigen solaren Folgeelementes (1) ausgehend von einem aktuellen Neigungswinkel (θp) bis zum Erreichen eines vorhergesagten optimalen Neigungswinkels (θopt) belastet werden.

2. Verfahren zur Steuerung nach einem Anspruch 1, wobei die Beobachtung der Wolkenbedeckung gemäß einer der folgenden Methoden ausgeführt wird:

- Aufnehmen von Bildern des Himmels vom Boden aus mittels eines Aufnahmegerätes;
- Messen der solaren Lichtdichte vom Boden aus mittels einer Anordnung von mehreren lichtempfindlichen Zellen;
- Abrufen von Satellitenbildern des Himmels über dem einachsigen solaren Folgeelement (1).

3. Verfahren zur Steuerung nach einem der vorhergehenden Ansprüche, wobei während Schritt b), ein Frequenzgewichtungsschritt auf die Beobachtung angewendet wird, welche gleichzeitig von einer Frequenzantwort des Beobachtungssystems (2) und einem für den Solarkollektor geeigneten Frequenzband abhängt.

4. Verfahren zur Steuerung nach einem der vorhergehenden Ansprüche, wobei:

- um den Schritt a) auszuführen, die Wolkenbedeckung regelmäßig zu mehreren aufeinanderfolgenden aktuellen Zeitpunkten t beobachtet wird, und eine zweidimensionale Kartierung (5) jedem aktuellen Zeitpunkt t zugeordnet wird;
- um den Schritt c) auszuführen, zu jedem aktuellen Zeitpunkt t eine vorausschauende zweidimensionale Kartierung (6) zu einem zukünftigen Zeitpunkt t+nP, wo n eine ganze Zahl ungleich Null ist und P einem Zeitraum zwischen zwei aufeinanderfolgenden Beobachtungen entspricht, in Abhängigkeit der zweidimensionalen Kartierungen (5), die zu mehreren vergangenen Zeitpunkten t-mP ermittelt wurden, wo m eine ganze Zahl ungleich Null ist, berechnet wird;
- um den Schritt d) auszuführen, für jede vorausschauende zweidimensionale Kartierung (6) zu einem zukünftigen Zeitpunkt t+nP ein vorausschauender optimaler Neigungswinkel (θopt) berechnet wird.

5. Verfahren zur Steuerung nach einem der vorhergehenden Ansprüche, wobei während dem Schritt d) der optimale Neigungswinkel (θopt) für eine vorausschauende zweidimensionale Kartierung (6) nach einer Rechenmethode berechnet wird, welche zu der Rechenmethode äquivalent ist, welche während dem Schritt b) angewendet wird, um den optimalen Neigungswinkel (θopt) für eine zweidimensionale Kartierung (5) zu berechnen.

6. Verfahren zur Steuerung nach einem der vorhergehenden Ansprüche, wobei während dem Schritt e) das Steuern der Ausrichtung des einachsigen solaren Folgeelementes (1) auch gemäß einem Neigungswinkel, der direkter Neigungswinkel genannt wird, ausgeführt wird, der durch eine astronomische Berechnung der Position der Sonne ermittelt wird.

7. Verfahren zur Steuerung nach Anspruch 6, wobei der aktuelle Orientierungswinkel dem direkten Neigungswinkel entspricht.

8. Einachsiges solares Folgeelement (1), das um eine Drehachse (A) herum orientierbar ist, von der Art, die eine feste Struktur (11) zur Verankerung im Boden und eine Plattform (12), die geeignet ist, um mindestens einen Solarkollektor (13) zu tragen, umfasst, wobei die Plattform (12) auf der festen Struktur (11) entlang der Drehachse (A) mittels eines Betätigungssystems (3) drehbar betätigbar ist, wobei das einachsige solare Folgeelement (1) **dadurch gekennzeichnet ist, dass** es außerdem ein Beobachtungssystem (2) für die Entwicklung der Wolkenbedeckung über dem einachsigen solaren Folgeelement (1) über die Zeit und eine Steuereinheit (4) umfasst, die einerseits mit dem Beobachtungssystem (2) verbunden ist, um dessen Beobachtungsdaten zu empfangen, und andererseits mit dem Betätigungssystem (3) verbunden ist, um die Drehung der Plattform (12) zu steuern, wobei die besagte Steuereinheit (4) umfasst:

ein kartographisches Modul (40), das dazu vorgesehen ist, jede vom Beobachtungssystem (2) durchgeführte Beobachtung in eine zweidimensionale Kartierung (5) der solaren Leuchtdichte zu übersetzen oder umzuwandeln;

ein Archivierungsmodul (41), das jede von dem kartographischen Modul (40) erzeugte zweidimensionale Kartierung (5) archiviert

ein prädiktives Berechnungsmodul (42), das prädiktiv zweidimensionale Kartierungen (6) der solaren Leuchtdichte für zukünftige Zeitpunkte auf der Grundlage der zweidimensionalen Kartierungen (5), die zu einem aktuellen Zeitpunkt durch das kartographische Modul (40) erzeugt werden, und auf der Grundlage der vergangenen zweidimensionalen Kartierungen (5), die in dem Archivierungsmodul (41) archiviert sind, berechnet;

ein Modul zur Berechnung des optimalen Neigungswinkels (43), das den optimalen Neigungswinkel (θopt) für jede erzeugte zweidimensionale Kartierung (5) und für jede vorausschauende zweidimensionale Kartierung (6) berechnet;

ein Modul zur Entwicklung des optimalen Neigungswinkels (44), das die vom Modul zur Berechnung des optimalen Neigungswinkels (43) ermittelten optimalen Neigungswinkel (θopt) abruft, um die Entwicklung des optimalen Neigungswinkels (θopt) zu ermitteln;

ein Parametrisierungsmodul (45), das Parameter betreffend die Geschwindigkeit der Verschiebung des Betätigungssystems (3), Parameter betreffend den Energieverbrauch des Betätigungssystems (3) für eine Änderung der Ausrichtung, Parameter betreffend die Solarenergieerzeugung und Parameter betreffend eine Abnutzungsrate der mechanischen Elemente des einachsigen solaren Folgeelements (1) während einer Änderung der Ausrichtung des einachsigen solaren Folgeelements (1) umfasst;

ein astronomisches Berechnungsmodul (46), das zu einem aktuellen Zeitpunkt den direkten Neigungswinkel berechnet, der durch die direkte Sonneneinstrahlung auf das einachsige solare Folgeelement (1) definiert ist; und

ein Steuerungsmodul (47), das die Steuerung des Neigungswinkels (θ) des einachsigen solaren Folgeelements (1) in Abhängigkeit von der Entwicklung des optimalen Neigungswinkels (θopt) aus dem Modul zur Entwicklung des optimalen Neigungswinkels (44), den verschiedenen Parametern aus dem Parametrisierungsmodul (45) und des direkten Neigungswinkels (θopt) aus dem astronomischen Berechnungsmodul (46) berechnet, wobei das Steuerungsmodul (47) einen Winkelsollwert an das Betätigungssystem (3) ausgibt, um die Änderung der Ausrichtung der Plattform (12) des einachsigen solaren Folgeelements (1) zu steuern.

9. Einachsiges solares Folgeelement (1), nach Anspruch 8, wobei das einachsige solare Folgeelement (1) umfasst:

eine Bildaufnahmevorrichtung, die zum Aufnehmen von Himmelsbildern vom Boden aus konfiguriert ist; und/oder

eine Anordnung von mehreren lichtempfindlichen Zellen, die zur Messung der solaren Leuchtdichte vom Boden aus konfiguriert sind; und/oder

ein Modul, das für zum Abrufen von Satellitenbildern des Himmels über dem einachsigen solaren Folgeelement (1) konfiguriert ist.

## Claims

1. Method for controlling the orientation of a single-axis solar tracker (1) orientable about an axis of rotation (A), said method implementing the following steps:

a) observing the evolution over time of the cloud coverage above the single-axis solar tracker (1), by observing the cloud coverage at several consecutive instants by means of an observation system (2) of the sky above the single-axis solar tracker (1);

b) translating each observation of the cloud coverage into a bidimentional mapping (5) of the solar luminance and determining the evolution over time of an optimum inclination angle (θopt) of the single-axis solar tracker (1), depending on the observed cloud coverage, by calculating for each bidimentional mapping (5) at each instant an optimum inclination angle (θopt);

c) predicting the future evolution of the cloud coverage based on the prior observed evolution of the cloud coverage, by calculating at each present instant at least a predictive mapping (6) of the solar luminance at a future instant, by implementing a predictive calculation taking into account an evolution of the distribution of the solar luminance on the bidimentional mappings (5) established at several past instants;

d) calculating the future evolution of the optimum inclination angle (θopt) depending on the prediction of the future evolution of the cloud coverage, by calculating for each predictive bidimentional mapping (6) a predictive optimum inclination angle (θopt) at a future instant associated to the maximum of the solar luminance on said predictive (6); and

e) servo-controlling the orientation of the single-axis solar tracker (1) depending on a wear rate of mechanical members of the single-axis solar tracker (1) loaded for an orientation change of the single-axis solar tracker (1) by starting from a present inclination angle ($\theta$p) until reaching a predictive optimum inclination angle of ($\theta$opt).

2. Controlling method according to claim 1, wherein the observation of the cloud coverage is carried out according to any of the following methods:

- sky images pickup from the ground by means of an image pickup apparatus;
- measurement of the solar luminance from the ground by means of a set of several photosensitive cells;
- recovery of satellite images of the sky above the single-axis solar tracker (1).

3. Controlling method according to any one of the preceding claims, wherein, during step b), there is implemented a frequency weighting step applied on the observation which is a function of both a frequency response of the observation system (2) and a useful frequency band of the solar collector.

4. Controlling method according to any one of the preceding claims, wherein:

- to carry out step a), the cloud coverage is observed periodically at several consecutive present instants t, and a bidimentional mapping (5) is associated to each present instant t;
- to carry out step c), at each present instant t, there is calculated a predictive bidimentional mapping (6) at a future instant t+nP, where n is non-zero integer and P corresponds to a period of time between two consecutive observations, as a function of the bidimentional mappings (5) established at several past instants t-mP, where m is a non-zero integer;
- to carry out step d), for each predictive bidimentional mapping (6) at a future instant t+nP is calculated a predictive optimum inclination angle ($\theta$opt).

5. Controlling method according to any one of the preceding claims, wherein, during step d), the optimum inclination angle ($\theta$opt) for a predictive bidimentional mapping (6) is calculated according to a calculation method equivalent to that used during step b) for calculating the optimum inclination angle ($\theta$opt) for a bidimentional mapping (5).

6. Controlling method according to any one of the preceding claims, wherein, during step e), the servo-control of the orientation of the single-axis solar tracker (1) is also carried out according to an inclination angle called direct inclination angle established by an astronomical calculation of the Sun's position.

7. Controlling method according to claim 6, wherein the present angle of orientation corresponds to the direct inclination angle.

8. Single-axis solar tracker (1) orientable about an axis of rotation (A), of the type comprising a fixed structure (11) for anchorage to the ground and a platform (12) capable of supporting at least one solar collector (13), said platform (12) being rotatably actuatable on the fixed structure (11) along said axis of rotation (A) by means of an actuation system (3), said single-axis solar tracker (1) being **characterized in that** it further comprises an observation system (2) of the evolution over time of the cloud coverage over the single-axis solar tracker (1) and a control unit (4) in connection, on the one hand, with the observation system (2) to receive its observation data and, on the other hand, with the actuation system (3) for controlling the rotation of the platform (12), where said control unit (4) comprises:

a cartographic module (40) provided to translate or convert each observation performed by the observation system (2) into a bidimensional mapping (5) of solar luminance;
an archiving module (41) which archives each bidimensional mapping (5) generated by the cartographic module (40);
a predictive calculation module (42) which calculates predictive bidimensional mappings (6) of the solar luminance for future instants based on the bidimensional mappings (5) generated at a present instant by the cartographic module (40) and based on the past bidimensional mappings (5) archived in the archiving module (41);
an optimum inclination angle calculation module (43) which calculates the optimum inclination angle ($\theta$opt) for each generated bidimensional mapping (5) and for each predictive bidimensional mapping (6);
an optimum inclination angle evolution module (44) which recovers optimum inclination angles ($\theta$opt) derived from the optimum inclination angle calculation module (43) in order to establish the evolution of the optimum inclination angle ($\theta$opt);
a parametrization module (45) which comprises parameters relating to the speed of displacement of the actuation system (3), parameters relating to the energy consumption by the actuation system (3) for an orientation change, parameters relating to solar energy production, and parameters relating to a wear rate of the mechanical members of the single-axis solar tracker (1) during an orientation change of the single-axis solar tracker (1);

an astronomical calculation module (46) which calculates at a present instant the direct inclination angle defined by the direct solar radiation at the single-axis solar tracker (1); and

a servo-control module (47) which calculates the servo-control of the inclination angle ($\theta$) of the single-axis solar tracker (1) depending on the evolution of the optimum inclination angle ($\theta$opt) from the optimum inclination angle evolution module (44), the various parameters from the parametrization module (45), and the direct inclination angle ($\theta$opt) from the astronomical calculation module (46), where the servo-control module (47) outputs an angular setpoint to the actuation system (3) in order to control the orientation changes of the platform (12) of the single-axis solar tracker (1).

9. Single-axis solar tracker (1) according to claim 8, wherein said single-axis solar tracker (1) comprises:

an image pickup apparatus configured for picking up sky images pickup from the ground; and/or

a set of several photosensitive cells configured for measuring the solar luminance from the ground; and/or

a module configured for recovering of satellite images of the sky above the single-axis solar tracker (1).

**Fig. 1**

**Fig. 2**

Fig. 3

| 50% | 85% | 90% | 51(1) |
| 50% | 60% | 85% | 51(2) |
| 1% | 2% | 1% | 51(3) |

Fig. 4

Fig. 5

Fig. 6

Fig. 7a

Fig. 7b

(8a)

(8b)

(8c)

(8d)

Fig. 8

5

| 5 | 10 | 10 | 10 | 0 |
|----|----|----|----|----|
| 10 | 10 | 10 | 10 | 10 |
| 10 | 50 | 50 | 40 | 10 |
| 10 | 50 | 90 | 50 | 10 |
| 10 | 80 | 90 | 80 | 10 |
| 10 | 50 | 90 | 50 | 10 |
| 10 | 20 | 50 | 20 | 0 |

6

| 0 | 10 | 10 | 10 | 0 |
|----|----|----|----|----|
| 0 | 10 | 20 | 50 | 20 |
| 0 | 10 | 50 | 90 | 50 |
| 0 | 10 | 90 | 90 | 80 |
| 0 | 10 | 50 | 80 | 50 |
| 0 | 10 | 30 | 50 | 20 |
| 0 | 10 | 10 | 10 | 0 |

6

| 0 | 10 | 10 | 10 | 50 |
|----|----|----|----|----|
| 0 | 10 | 10 | 50 | 80 |
| 0 | 10 | 10 | 80 | 90 |
| 0 | 10 | 10 | 50 | 90 |
| 0 | 10 | 10 | 20 | 50 |
| 0 | 0 | 10 | 10 | 10 |
| 0 | 0 | 0 | 0 | 0 |

$t$     $t+1$     $t+n$

$\ominus$ opt $(t)$     $\ominus$ opt $(t+1)$   ----   $\ominus$ opt $(t+n)$

Fig. 9

4

2

40 → 41

42

43

44

45

46

47

3

Fig. 10

22

Fig. 11

Fig. 12

## EP 3 892 938 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011158467 A1
- US 2011220091 A1
- US 2010139644 A1